# EUROPÄISCHE PATENTSCHRIFT

(11) **EP 3 743 392 B1**
(45) Veröffentlichungstag und Bekanntmachung des Hinweises auf die Patenterteilung: **02.03.2022**
(21) Anmeldenummer: 19700446.8
(22) Anmeldetag: 02.01.2019
(51) Int. Cl.: C03B 35/26, C03B 23/045, C03B 23/11

(54) **POSITIONIERUNGSVORRICHTUNG FÜR EINEN VORLADEKRANZ EINER HEISSFORMMASCHINE**
POSITIONING DEVICE FOR A PRELOADING RING OF A HOT-FORMING MACHINE
DISPOSITIF DE POSITIONNEMENT POUR UNE COURONNE DE PRÉCHARGEMENT D'UNE MACHINE DE MISE EN FORME À CHAUD

(30) Priorität: 23.01.2018 DE 102018101480
(43) Veröffentlichungstag der Anmeldung: 02.12.2020
(73) Patentinhaber: SCHOTT Schweiz AG, 9001 St. Gallen (CH)
(72) Erfinder: TREMP, Marcel, 9042 Speicher (CH)
(74) Vertreter: Ullrich & Naumann PartG mbB
(86) Internationale Anmeldenummer: PCT/EP2019/050045
(87) Internationale Veröffentlichungsnummer: WO 2019/145124

(56) Entgegenhaltungen:
- CN-A- 101 671 114
- CN-A- 102 180 590
- DE-B1- 2 456 584
- US-A- 4 526 270

## Beschreibung

Die Erfindung betrifft eine Positionierungsvorrichtung für einen Vorladekranz einer Heißformmaschine für Pharmacontainer aus Glasrohren, umfassend ein erstes Halteelement mit einer Ausnehmung, und ein im Bereich der Ausnehmung angeordnetes, der Ausnehmung zugewandtes zweites Halteelement, wobei die Halteelemente derart beweglich zueinander angeordnet sind, dass durch eine Bewegung der Halteelemente zueinander ein Glasrohr in der Ausnehmung und zwischen den Halteelementen umfassbar ist. Sie betrifft weiter eine Heißformmaschine.

Heißformmaschinen der eingangs genannten Art dienen der automatisierten Bearbeitung von Glas in mehreren, in der Regel kreisförmig angeordneten Bearbeitungsstationen. Sie dienen häufig zur Herstellung von Pharmacontainern wie Glasfläschchen (Vials), Karpulen oder Spritzenkörpern und weisen üblicherweise auf ihrer Oberseite einen Vorladekranz auf, in den kranzförmig jeweils ein Glasrohr von ca. 1,5 m Länge in eine Vorladeposition eingelegt wird. Das Glasrohr fällt dann an einer definierten Stelle z.B. durch Schieben aus der Vorladeposition über eine entsprechende Öffnung durch ein Haltefutter nach unten und wird dann von den Klemmbacken des Haltefutters fixiert, so dass das Glasrohr um eine bestimmte Länge nach unten über das Haltefutter übersteht. Am nach unten überstehenden offenen Ende wird das Glasrohr bestimmten Bearbeitungsvorgängen unterzogen, die an unterschiedlichen Bearbeitungsstationen durchgeführt werden. Hierzu wird die Maschine und mit ihr die Haltefutter um einen bestimmten Winkel von einer Bearbeitungsposition zur nächsten gedreht. Dies erfolgt in einer gegebenen Taktgeschwindigkeit. Entsprechende Vorrichtungen sind dem Fachmann beispielsweise aus der US 4526270 A und der DE 2821735 A1 bekannt.

Je nach zu erzeugendem Endprodukt müssen der Heißformmaschine Glasrohre unterschiedlicher Durchmesser zur Bearbeitung übergeben werden. Dabei ist es aber erforderlich, dass die Positionen der Glasrohre für jeden Durchmesser exakt mit dem Haltefutter unter dem Vorladekranz fluchten. Glasrohre jeden Durchmessers müssen also exakt positioniert werden. Im Vorladekranz heutiger Heißformmaschinen werden als Positionierungsvorrichtungen Klammern verwendet, die zwei Halteelemente aufweisen, zwischen denen das Glasrohr umfasst wird. Diese weisen häufig Ausnehmungen auf, in denen das Glasrohr liegt. Damit die unterschiedlichen

Glasrohrdurchmesser stets konzentrisch zum Haltefutter positioniert sind, werden bei den heutigen Systemen dimensionsabhängige Einsätze benötigt. Dies bedeutet bei der heute üblichen Anzahl von 20-24 Bearbeitungspositionen und damit 20-24 Glasrohrpositionen zum einen eine entsprechend hohe Anzahl von Einsätzen sowie eine vergleichsweise lange Umrüstzeit DE 24 56 584 B1, CN 101 671 114 A und CN 102 180 590 A offenbaren Halteelemente für Glasrohre.

Es ist daher Aufgabe der Erfindung, eine Positionierungsvorrichtung für einen Vorladekranz einer Heißformmaschine anzugeben, die auf technisch besonders einfache und schnelle Weise für verschiedene Glasrohrdurchmesser anpassbar ist.

Diese Aufgabe wird erfindungsgemäß gelöst, indem zunächst das Positionierungselement als Halteklammer ausgebildet ist, wobei die Halteelemente als im Wesentlichen gerade Schenkel der Halteklammer ausgebildet sind, und wobei die jeweilige Bewegung der Schenkel um jeweils eine Achse erfolgt, wobei der jeweilige Schenkel eine zweite Ausnehmung umfasst, die in Bezug auf die Achse radial von der ersten Ausnehmung entfernt und derart angeordnet ist, dass durch die Bewegung der Halteelemente zueinander ein zweites Glasrohr in der zweiten Ausnehmung und zwischen den Halteelementen umfassbar ist.

Die Erfindung geht dabei von der Überlegung aus, dass eine besonders einfache Anpassbarkeit eines Positionierungselements auf unterschiedliche Rohrdurchmesser dadurch erreichbar wäre, wenn die Dimensionierung der Halteelemente und der Ausnehmung für die Führung der Glasrohre nicht manuell angepasst werden müsste, sondern automatisiert und dynamisch verändert werden könnte. Hierzu sollte eine entsprechende Geometrie der Halteelemente vorgesehen werden, die unterschiedliche Durchmesser für die Führungen der Glasrohre bereitstellt. Hierbei wurde überraschend erkannt, dass eine derartige Geometrie dadurch erreicht werden kann, dass die das Glasrohr klammernden Halteelemente nicht in einer Ebene beweglich sind, z.B. in der Art einer Zange, sondern dass die beiden Halteelemente in unterschiedlichen, aber aneinander grenzenden Ebenen beweglich sind, in der Art einer Schere. Dadurch können die Halteelemente nicht nur bis zum Aneinanderstoßen zusammenbewegt werden, sondern können überlappen, wodurch neue Geometrien für die Führung des Glasrohres möglich werden. Insbesondere sollte der Bewegungsradius der Halteelemente in der Positionierungsvorrichtung so groß gewählt sein, dass die Halteelemente im Bereich der Außenkanten der Ausnehmung überlappen. Durch die Überlappung mit dem angrenzenden anderen Halteelement wird dann die durch die Ausnehmung gebildete Öffnung für das Glasrohr bei einer Zusammenbewegung der Halteelemente verkleinert, so dass bisher nicht erreichbare Führungsgeometrien für kleinere Rohrdurchmesser entstehen. Dadurch kann die Positionierungsvorrichtung ohne manuelle Umrüstung auch kleinere Rohrdurchmesser zuverlässig führen oder greifen.

Das Positionierungselement ist weiterhin in der Art einer Schere ausgebildet, in deren Schenkeln Ausnehmungen für das Führen des Glasrohres eingebracht sind. Durch das Schließen der Schenkel werden die Glasrohre sicher gehalten, wobei durch die oben beschriebene Überlappung auch Glasrohre geringerer Durchmesser sicher gehalten werden können. Im Gegensatz zu einer üblichen Schere müssen die Schenkel jedoch nicht in einer gemeinsamen Achse fixiert sein, sondern können auch um zwei unterschiedliche (aber ggf. symmetrisch angeordnete) Achsen drehen.

Schließlich umfasst der jeweilige Schenkel eine zweite Ausnehmung, die in Bezug auf die Achse radial von der ersten Ausnehmung entfernt und derart angeordnet ist, dass durch die Bewegung der Halteelemente zueinander ein zweites Glasrohr in der zweiten Ausnehmung und zwischen den Halteelementen umfassbar ist.

Dieser letztgenannte Aspekt der Erfindung betrifft das Problem, dass bei heutigen Vorladekränzen bereits dann ein Glasrohr wieder nachgeladen und gehalten werden soll, wenn das zuvor bearbeitete Glasrohr noch im oben beschriebenen Haltefutter gehalten und noch nicht vollständig verarbeitet wird. Am unteren Vorladekranz sind hierfür bereits Schieber bekannt, die ein Glasrohr aus einer schrägen Vorladeposition in eine gerade Ladeposition schieben, so dass das Glasrohr in die Vorladeposition eingelegt werden kann, während die Ladeposition am unteren Vorladekranz noch durch ein aktuell bearbeitetes Glasrohr belegt ist. Die Klammern am oberen Vorladekranz eignen sich jedoch nur zum Halten eines einzigen Glasrohres.

Die Ausbildung eines Positionierungselements in einer der oben genannten Weisen als Halteklammer mit zwei gegeneinander bewegten Schenkeln als Halteelemente ermöglicht es nunmehr, durch einfaches Einbringen einer weiteren Ausnehmung eine zweite Führungs- oder Halteposition für ein zweites Glasrohr zu schaffen, so dass bereits ein zweites Glasrohr in eine Vorladeposition gebracht werden kann (die radial weiter außen liegende Ausnehmung), während das erste Glasrohr noch in der Ladeposition liegt, ohne bereits nach unten in ein Haltefutter gefallen zu sein.

In vorteilhafter Ausgestaltung des Positionierungselementes sind die beiden Halteelemente und/oder deren jeweilige Bewegung spiegelsymmetrisch zueinander. Die Halteelemente weisen somit spiegelgleiche Außendimensionen sowie Ausnehmungen auf und bewegen sich stets spiegelsymmetrisch zueinander, allerdings - wie oben dargelegt - nicht in einer Ebene sondern in unterschiedlichen, aber aneinandergrenzenden Ebenen. Durch die Symmetrie wird eine besonders einfache Positionierung und Ausrichtung in der Flucht der eingangs erwähnten Haltefutter erreicht, da die durch die Halteelemente und deren Ausnehmungen gebildete Öffnung stets in der Symmetrieachse zentriert ist. Für jeden Rohrdurchmesser ergibt sich somit eine gleiche Position der Rohrachse.

Vorteilhafterweise erfolgt die Bewegung der Halteelemente in der Art einer Scherung in unterschiedlichen Ebenen, und wobei der Bewegungsumfang derart ist, dass die Halteelemente an den Außenkanten der Ausnehmung überlappen können.In einer Ausgestaltung, in der die Schenkel um symmetrisch angeordnete Achsen drehbar gelagert sind, ist es von besonderem Vorteil, wenn die Schenkel auf der der Ausnehmung abgewandten Seite der Achse über jeweils ein Pleuel mit einem in der Symmetrieachse geführten Kolben verbunden sind. Durch eine derartige Anordnung ist durch eine lineare Bewegung des Kolbens, d.h. eine Bewegung an nur einem Angriffspunkt eine symmetrische Bewegung beider Schenkel erreichbar, da über die beiden (ebenfalls symmetrischen) Pleuel eine entsprechende Bewegung der Schenkel bewirkt wird.

In besonders vorteilhafter Ausgestaltung ist die jeweilige Ausnehmung als Einkerbung ausgebildet. Unter einer Einkerbung wird hierbei eine offene Ausnehmung in Form einer Kerbe verstanden, d.h. ein V-förmiger, U-förmiger oder halbkreisförmiger Einschnitt am Rand des jeweiligen Halteelements. Dies steht insbesondere im Gegensatz zu einer geschlossenen Ausnehmung wie z.B. einer Öffnung oder einem Loch. Diese Einkerbung bzw. diese Einkerbungen sind dabei in die jeweils einander zugewandten Seiten der Halteelemente bzw. die Innenseiten der Schenkel eingebracht.

In weiterer vorteilhafter Ausgestaltung bilden die mit den Einkerbungen versehenen Innenseiten der Schenkel zumindest zwischen der ersten und der zweiten Einkerbung eine auf die jeweilige Achse des Schenkels gerichtete Gerade. Mit anderen Worten: Die Innenkontur der Schenkel bildet zwischen der radial inneren und der radial äußeren Ausnehmung eine Grade, die in der Drehachse des jeweiligen Schenkels fluchtet. Dadurch wird erreicht, dass beim Öffnen der Schenkel diese zwischen den Einkerbungen eine keilförmige Öffnung bilden, so dass bei einem gegebenen Öffnungswinkel die Öffnungsbreite im Bereich der radial inneren Ausnehmung geringer ist als die Öffnungsbreite im Bereich der radial äußeren Ausnehmung. Dadurch wird erreicht, dass es einen Öffnungswinkel(-bereich) gibt, bei dem ein Glasrohr in der radial inneren Ausnehmung noch gegen Herausfallen geschützt ist, da die Öffnungsbreite geringer ist als dessen Durchmesser, gleichzeitig aber ein neues Glasrohr in die radial äußere Ausnehmung in radialer Richtung eingelegt werden kann, da hier die Öffnungsbreite größer ist als dessen Durchmesser.

Eine vorteilhafte Weiterbildung einer symmetrisch ausgebildeten Halteklammer mit zwei Führungspositionen für Glasrohre bezieht sich auf die Kontur der Einkerbungen in den Schenkeln: Vorteilhafterweise sind nämlich die erste und die zweite Einkerbung keilförmig ausgebildet, wobei der Öffnungswinkel der Einkerbung in der in Bezug auf die Achse radial weiter außen liegenden Einkerbung geringer ist als der der radial weiter innen liegenden Einkerbung, so dass die beiden Überlappungen jeweils gespiegelter Einkerbungen in jedem Öffnungswinkel der Schenkel jeweils eine Führung für Glasrohre gleicher Durchmesser bilden. Eine Vergrößerung des Öffnungswinkels zwischen den beiden Schenkeln führt nämlich in größerem radialem Abstand zu einer größeren Verbreiterung der Öffnung zwischen den Schenkeln. Diese sollte durch eine entsprechende Gestaltung der Einkerbungskontur ausgeglichen werden. Sind die Einkerbungen keilförmig ausgebildet und die Führungspositionen damit rautenförmig durch gegenüberliegende keilförmige Konturen gebildet, kann die größere Öffnung zwischen den Schenkeln im radial weiter außen liegenden Bereich durch einen geeignet geringeren Öffnungswinkel der keilförmigen Einkerbung ausgeglichen werden.

Eine Heißformmaschine umfasst vorzugsweise einen oberen Vorladekranz mit einer n-zählig radiärsymmetrisch angeordneten Mehrzahl von Positionierungsvorrichtungen, die als die oben beschriebenen Halteklammern ausgebildet sind, und einen konzentrisch darunter angeordneten unteren Vorladekranz mit einer Positionierungsvorrichtung, die als Führungsring ausgebildet ist, wobei die Radiärsymmetrie der Führungsringe ebenfalls n-zählig ist. Im unteren Vorladekranz, wo kein Einführen der Glasrohre in radialer Richtung notwendig ist, sondern lediglich eine Zentrierung der Glasrohre bei axialer Hindurchbewegung (beim Fallen während des Glasbearbeitungsvorganges) benötigt wird, kann die beschriebene Ausbildung als Führungsring zur Anwendung kommen. Im oberen Vorladekranz hingegen, wo Glasrohre radial eingelegt werden, sollten die beschriebenen Halteklammern zur Führung und Positionierung verwendet werden. Für jede Öffnung in den Führungsringen des unteren Vorladekranzes ist dabei eine darüber angeordnete Halteklammer vorgesehen.

In vorteilhafter Weiterbildung der Heißformmaschine umfasst der untere Vorladekranz eine n-zählig radiärsymmetrisch angeordnete Anzahl von Glasrohraufnahmen, die jeweils wannenförmig in radialer Richtung erstreckt sind, und auf ihrer radial innenliegenden Seite eine axiale Öffnung aufweisen, die jeweils mit einer Öffnung der Führungsringe fluchten. Eine derartige Ausbildung von Glasrohraufnahmen ist insbesondere in Verbindung mit den Halteklammern mit zwei radial beabstandeten Führungspositionen geeignet, um eine Vorladeposition und eine Ladeposition für ein Glasrohr zu definieren. In der Vorladeposition wird das Glasrohr unten in die radial äußere Seite der wannenförmigen Glasrohraufnahme gestellt und oben in der radial äußeren Führungsposition der Halteklammer gehalten. Es kann dann durch einen Schieber in die Ladeposition geschoben werden, wobei es oben in die radial innere Führungsposition der Halteklammer bewegt wird und unten in der wannenförmigen Glasrohraufnahme nach radial innen geschoben wird und damit über eine Öffnung der Führungsringe gebracht wird, wo es somit zuverlässig über dem darunter liegenden Haltefutter positioniert wird. Die Vorladeposition ist damit wieder frei für ein weiteres Glasrohr.

Die mit der Erfindung erzielten Vorteile bestehen insbesondere darin, dass durch eine überlappende, in benachbarten Ebenen ausgestaltete Bewegung zweier Halteelemente einer Positionierungsvorrichtung eine sichere Führung von Glasrohren verschiedenster Durchmesser in einer Heißformmaschine erreicht wird. Dieses Konzept kann sowohl für scherenartige Halteklammern im oberen Vorladekranz als auch für Führungsringe im unteren Vorladekranz zur Anwendung kommen. In beiden Fällen ergeben sich erhebliche Einsparungen bezüglich der Umrüstzeit, da keine manuelle Anpassung an unterschiedliche Glasrohrdurchmesser erfolgen muss (bei den Halteklammern) oder die Einstellung insbesondere bei den Führungsringen nicht für jede Position einzeln sondern mit einer Stellschraube für sämtliche Positionen gleichzeitig erfolgen kann. Darüber hinaus ermöglichen insbesondere die beschriebenen Halteklammern einen schonenderen Umgang mit dem Glasrohr in Bezug auf kosmetische Defekte.

Die beschriebenen Positionierungsvorrichtungen eignen sich auch besonders für ein Führen von Glasrohren in Heißformmaschinen mit vergleichsweise hoher Taktrate. Insbesondere durch die Bewegung und Fixierung der Schenkel der Klammern über die beschriebene Kolben-Pleuel-Mechanik schwenken diese nicht beim Takten der Heißformmaschine, was eine Reibung zwischen den Klammern und dem Glasrohr eliminiert.

Ausführungsbeispiele der Erfindung werden im Folgenden anhand von Zeichnungen erläutert. Darin zeigen:
- FIG 1: in einer schematischen Aufsicht Teile einer Heißformmaschine,
- FIG 2: den oberen Teil der Heißformmaschine mit oberem Vorladekranz mit Halteklammern und unterem Vorladekranz mit Glasrohraufnahmen in perspektivischer Ansicht,
- FIG 3: unter den Glasrohraufnahmen angeordnete Führungsringe als Halteelemente einer ersten Positionierungsvorrichtung,
- FIG 4A-C: ausschnittsweise Aufsichten der Führungsringe in unterschiedlichen gegeneinander verdrehten Positionen,
- FIG 5A-D: ausschnittsweise Aufsichten einer Halteklammer als zweite Positionierungsvorrichtung in unterschiedlichen Öffnungswinkeln der Schenkel mit Glasrohren unterschiedlicher Durchmesser, und
- FIG 6A-C: einen zeitlichen Ablauf des Schiebeprozesses aus einer Vorladeposition in eine Ladeposition in seitlicher Ansicht.

Gleiche Teile sind in allen Zeichnungen mit denselben Bezugszeichen versehen.

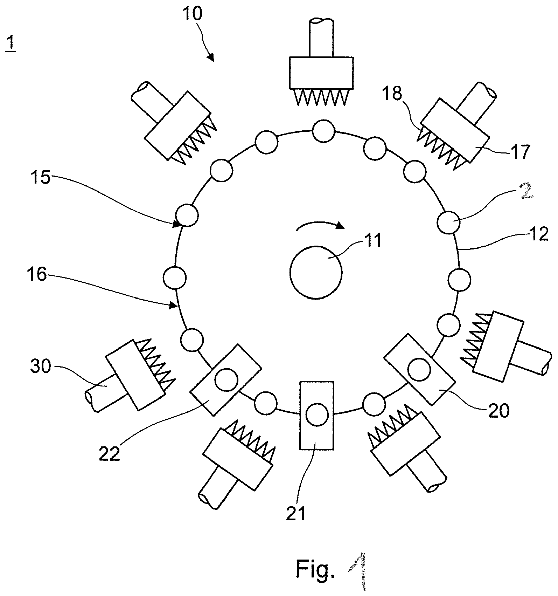

Die Fig. 1 zeigt in einer schematischen Aufsicht den grundsätzlichen Aufbau einer Heißformmaschine 1, die der Herstellung von Glasbehältnissen aus einem Glasrohr 2 dient, das von oben her vertikal ausgerichtet zugeführt wird. Die herzustellenden Glasbehältnisse, beispielsweise Glasfläschchen (Vials), Karpulen oder Spritzenkörper, dienen der Aufbewahrung von pharmazeutischen Wirkstoffen. Die Heißformmaschine 1 umfasst dabei eine sog. Muttermaschine 10, die insbesondere einer Heißumformung des zugeführten Glasrohrs 2 an einem dem späteren Boden oder offenen Ende des Glasbehältnisses gegenüberliegenden Ende dient, insbesondere zum Anformen eines Halses mit einer Halsöffnung.

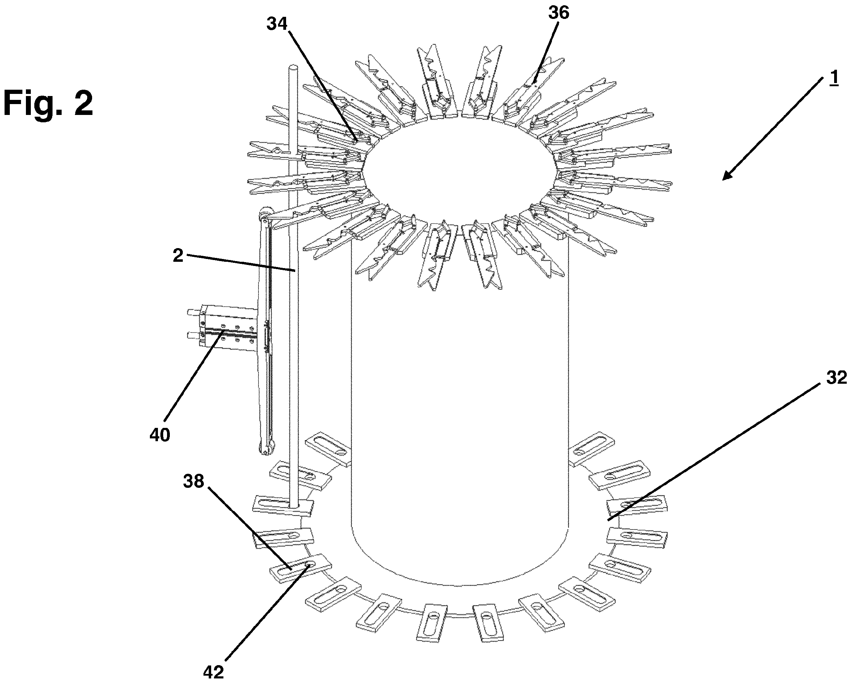

Glasrohre 2 werden an der Zuführposition 15 aus einem noch in Fig. 2 dargestellten Vorladekranz zugeführt. Sie fallen dabei durch Öffnen einer Haltevorrichtung im Vorladekranz nach unten, werden durch einen nicht dargestellten Rohrfänger aufgefangen und dann in Haltefuttern auf einer geeigneten Bearbeitungshöhe gehalten, die über den Umfang eines Drehtisches 12 verteilt angeordnet sind. Der Drehtisch 12 ist in der Art eines Drehkranzes mit Haltefuttern ausgebildet und ist an der zugeordneten Säule 11 drehbeweglich gelagert. Der Drehtisch 12 wird schrittweise um die zugeordnete Säule 11 gedreht bzw. geschwenkt. Dabei werden die an den Haltefuttern gehaltenen Glasrohre 2 schrittweise an Gasbrennern 17 und verschiedenen Bearbeitungsstationen 20-22 vorbeigeführt, an denen während einer jeweiligen Stillstandszeit die Bearbeitung und Heißumformung zu den Glasbehältnissen erfolgt.

Nach Passieren der Bearbeitungsstationen 20-22 werden die Glasbehältnisse zumindest im Bereich des Halses und der Halsöffnung nicht-taktil mit Hilfe eines Inspektionssystems 30 geprüft und ihre Eigenschaften dokumentiert. Bei dem Inspektionssystem 30 kann es sich beispielsweise um eine Videokamera mit einer Bildauswertungssoftware handeln, womit anhand der von der Videokamera aufgenommenen Bilder geometrischen Abmessungen der Glasbehältnisse ausgewertet werden, beispielsweise im Falle von Glasvials die geometrischen Abmessungen. Abschließend werden die Glasbehältnisse an der Position 16 an eine nachgeordnete Bearbeitungsmaschine übergeben.

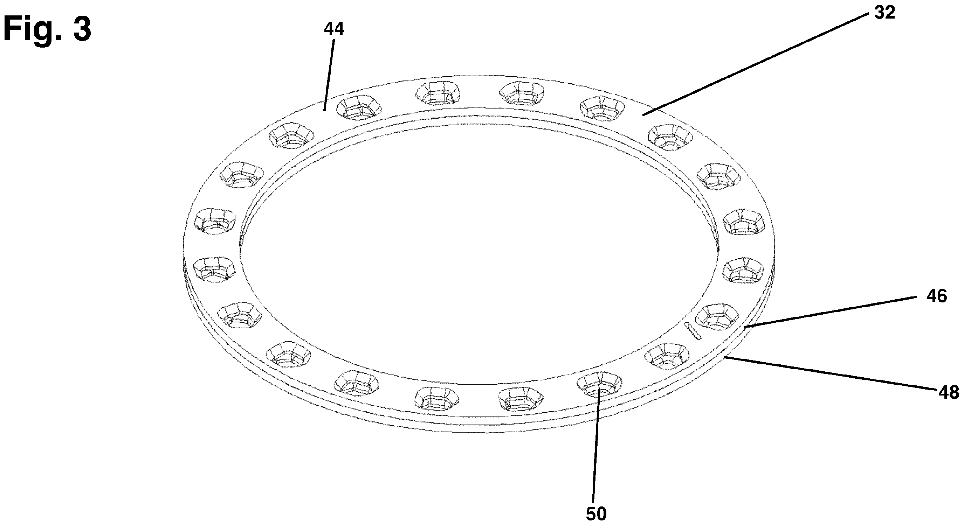

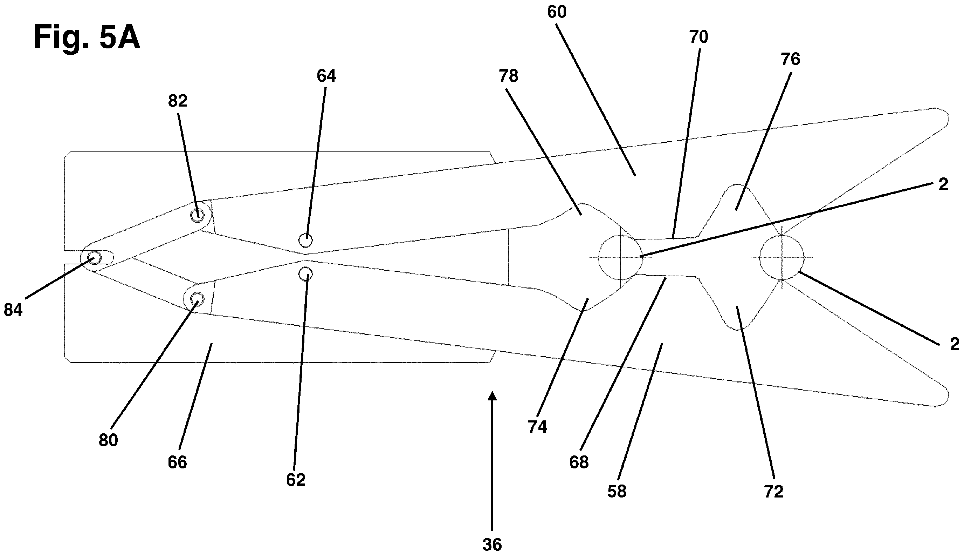

Fig. 2 zeigt in einer perspektivischen Ansicht den oberen Teil der Heißformmaschine 1 mit einem unteren Vorladekranz 32, dessen Aufbau noch in FIG 3-4C näher beschrieben wird, und einen oberen Vorladekranz 34 mit einer der Anzahl von Halteklammern 36, deren Aufbau noch zu Fig. 5A-5D näher beschrieben wird. Oberer und unterer Vorladekranz 32, 34 sind radiärsymmetrisch aufgebaut, wobei die Zähligkeit der Anzahl der Drehpositionen des Drehtisches 12 entspricht.

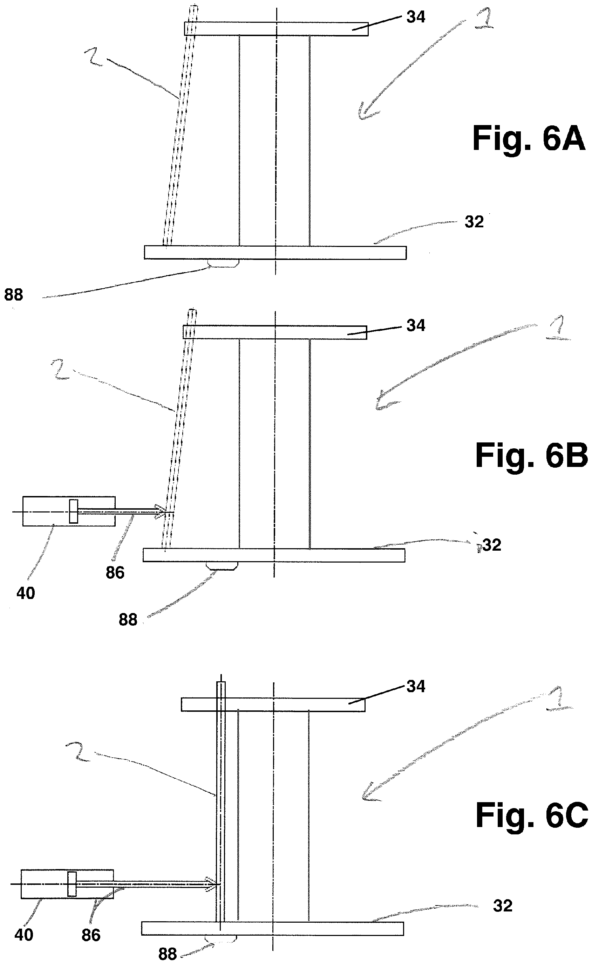

Dabei zeigt Fig. 2 beispielhaft ein Glasrohr 2 in einer radial inneren Ladeposition, aus der es durch Öffnen einer nicht näher dargestellten Verschlussvorrichtung die Halteklammer 36 senkrecht nach unten verlassen kann und dann im unteren Haltefutter gehalten wird. Im unteren Vorladekranz 32 sind in radialer Richtung erstreckte, wannenförmige Glasrohraufnahmen 38 angeordnet, in deren radial inneren Seite eine durch die genannte Verschlussvorrichtung verschließbare Öffnung 42 im Boden angeordnet ist, so dass die Glasrohre 2 hier wie beschrieben durch den unteren Vorladekranz 32 fallen können. In diese Position werden sie durch einen Schieber 40 gebracht, der sie aus einer äußeren Vorladeposition in die innere Ladeposition bringt. Dies wird noch näher in Fig. 6A-C erläutert.

Die Glasrohraufnahmen 38 bieten hierbei eine untere Führung, in der die Glasrohre 2 stehen können und in der sie lediglich in radialer Richtung verschoben werden können, wobei die radial innere Öffnung 42 in den Glasrohraufnahmen 38 eine weitere Vertiefung der Wanne bildet, so dass die Glasrohre 2 dort auch in radialer Richtung fixiert sind, sobald sie in die Öffnung 42 geschoben werden. Die Öffnung 42 ist durch die genannte Verschlussvorrichtung unterhalb verschlossen und kann bedarfsweise geöffnet werden.

Fig. 3 zeigt die unterhalb der Glasrohraufnahmen 38 angeordnete Positionierungsvorrichtung 44 des unteren Vorladekranzes 32. Diese umfasst zwei konzentrische, deckungsgleich übereinandergelegte kreisscheibenförmige Führungsringe 46, 48. Diese sind im Wesentlichen gleich aufgebaut und weisen in der gleichen Zähligkeit wie die der Glasrohraufnahmen 38 radiärsymmetrische Öffnungen 50 auf. Die beiden Führungsringe 46, 48 sind im Wesentlichen so angeordnet, dass ihre Öffnungen 50 miteinander fluchten, so dass sich eine Führung für die Glasrohre 4 ergibt, sie können jedoch mittels einer nicht näher dargestellten Stellschraube gegeneinander verdreht werden, so dass durch die verringerte Überlappung der Öffnungen 50 die resultierende Führung verkleinert wird.

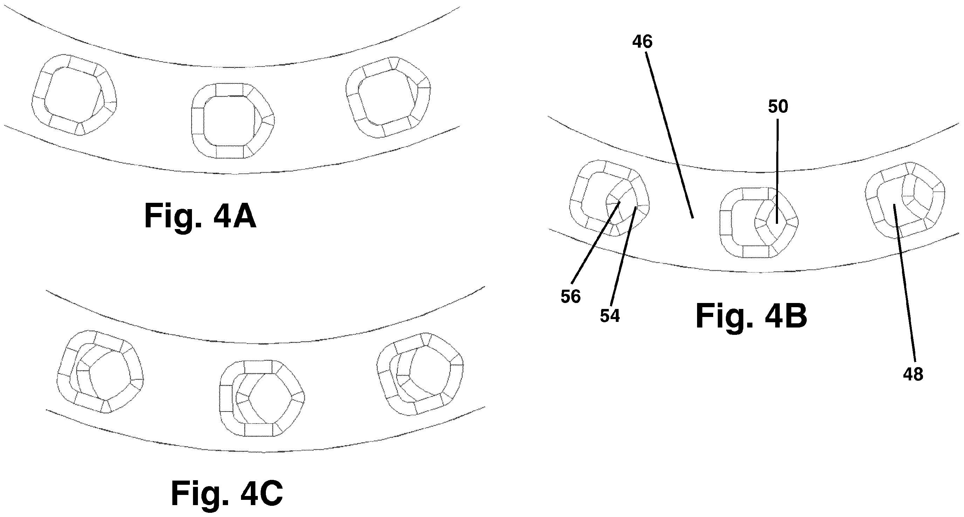

Dies wird in den Fig. 4A-C näher erläutert, wobei nur aus Gründen der Übersichtlichkeit nur in Fig. 4B Bezugszeichen verwendet werden. Fig. 4A-C zeigen ausschnittsweise die beiden Führungsringe 46, 48 in Aufsicht. Jede Öffnung der Führungsringe 46, 48 ist in der Grundform quadratisch mit abgerundeten Ecken. Beim oberen Führungsring 46 sind ist die Innenseite 54 jeder Öffnung 50, die in Umfangsrichtung gegen den Uhrzeigersinn angeordnet ist, keilförmig vertieft. Beim unteren Führungsring 48 findet sich hingegen eine spiegelverkehrte Anordnung, hier sind die Innenseiten 56 der Öffnungen 50, die in Umfangsrichtung im Uhrzeigersinn angeordnet sind, keilförmig vertieft. Sind die Öffnungen in maximaler Überdeckung, ergeben sich maximal große Führungen für große Rohrdurchmesser. Werden die Führungsringe jedoch mittels der Stellschraube gegeneinander verschoben, so bewegen sich die Innenseiten 54, 56 jeder Führung aufeinander zu, so dass (aufgrund der Keilform) rautenförmige Führungen entstehen, die bei wachsender Annäherung immer kleiner werden und sich für kleinere Rohrdurchmesser eignen. Die Bewegung der Führungsringe 46, 48 erfolgt dabei symmetrisch, so dass der Mittelpunkt der Führung stets am selben Ort bleibt und sich lediglich die Ausdehnung der Führung verringert.

Fig. 5A-D zeigen die Halteklammer 36 ausschnittsweise in verschiedenen Öffnungszuständen mit Glasrohren 2 unterschiedlicher Durchmesser. Aus Gründen der Übersicht ist wiederum nur Fig. 5A mit Bezugszeichen versehen. Die Halteklammer 36 umfasst zwei im gerade Schenkel 58, 60, die, wie die gesamte Anordnung, spiegelsymmetrisch ausgebildet, jedoch in zwei übereinanderliegenden, angrenzenden Ebenen angeordnet sind, so dass sie bei einer Bewegung gegeneinander überlappen können, ähnlich einer Schere. Sie sind in zwei beabstandeten Achsen 62, 64 auf einer Grundplatte 66 fixiert.

Die Schenkel weisen auf ihren einander zugewandten Innenseiten 68, 70 jeweils zwei radial beabstandete keilförmige, in der Spitze abgerundete Einkerbungen 72, 74, 76, 78 auf. Diese können - nach dem gleichen Prinzip wie bei den Öffnungen 50 der Führungsringe 46, 48 in Fig. 4A-C - durch unterschiedlich weite Überlappung durch Bewegung der Schenkel 58, 60 gegeneinander unterschiedlich große Führungen für Glasrohre 2 bilden. Dabei bilden die radial äußeren Einkerbungen 72, 76 eine erste Führung für die Vorladeposition und die radial inneren Einkerbungen 74, 78 eine zweite Führung für die Ladeposition.

Zunächst soll in Bezug auf Fig. 5A noch der Bewegungsmechanismus der Schenkel 58, 60 erläutert werden. Auf der den Einkerbungen 72, 74, 76, 78 abgewandten Seite der Achsen 62, 64 ist jeder Schenkel über je ein Pleuel 80, 82 mit einem in der Symmetrieachse der Halteklammer 36 linear geführten Kolben 84 verbunden. Durch diese symmetrische Anordnung können nur durch Antrieb und Bewegung des Kolbens 84 die Schenkel 58, 60 geöffnet und geschlossen werden und insbesondere in symmetrischer Weise in eine definierte Öffnungsposition gebracht werden. Dies dient zur Definition bestimmter Öffnungszustände, die zu Fig. 5A-D erläutert werden.

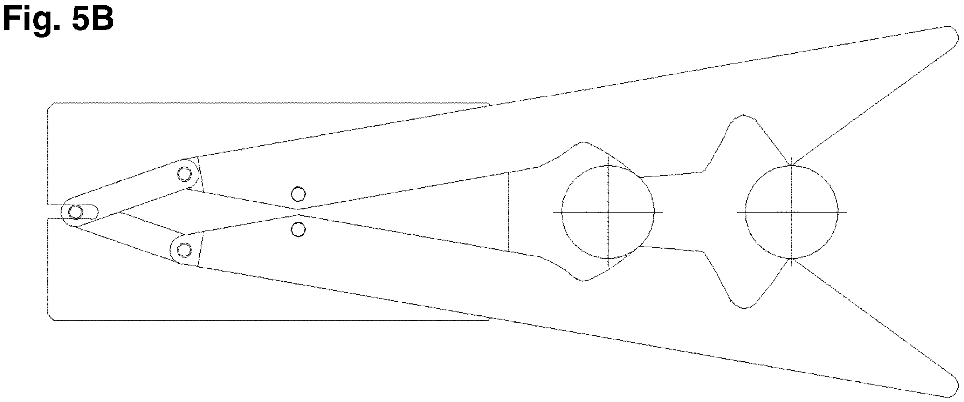

Ein erstes Gestaltungsmerkmal wird in Bezug auf FIG 5A und 5B erläutert. Zwischen den Einkerbungen 72, 74, 76, 78 weist jeder Schenkel 58, 60 eine gerade Kontur der Innenseite 68, 70 auf, die mit der jeweiligen Achse 62, 64 fluchtet. Die Gerade dieser Kontur setzt sich - jeweils unterbrochen durch die radial äußere Einkerbung 72, 76 - bis zur radialen Außenkante der radial äußeren Einkerbung 72, 76 fort. Danach erweitern sich die Konturen der Innenseiten 68, 70 der Schenkel 58, 60 in der Art eines Trichters nach außen hin, um das radiale Einführen eines Glasrohres 2 zu erleichtern.

Die beschriebene Geometrie ermöglicht es für unterschiedliche Glasrohrdurchmesser, im Ausführungsbeispiel von Glasrohrdurchmessern von 16 - 32mm, ein erstes Glasrohr 2 in der durch die inneren Einkerbungen 74, 78 gebildeten Führungen zu halten, während ein weiteres Glasrohr 2 radial von außen eingeführt werden kann. In den Fig. 5A und 5B ist der Öffnungswinkel der Schenkel 58, 60 jeweils so eingestellt, dass der Abstand der radialen Außenkanten der radial äußeren Einkerbungen 72, 76 dem Durchmesser eines in Fig. 5A dünneren, in Fig. 5B dickeren Glasrohres 2 entspricht. Zur Verdeutlichung ist jeweils ein Glasrohr 2 an dieser Stelle dargestellt. Das Glasrohr 2 kann also jeweils von außen in die durch die radial äußeren Einkerbungen 72, 76 gebildete Führung eingebracht werden. Durch die Verjüngung des Abstands der Innenseiten 68, 70 der Schenkel 58, 60 durch die beschriebene Geometrie kann jedoch das Glasrohr 2 in der durch die radial inneren Einkerbungen 74, 78 gebildeten Führung nicht nach radial außen fallen. Es besitzt zwar ein gewisses Spiel, bleibt jedoch locker gehalten. Wie Fig. 5A und 5B zeigen, ermöglicht die Geometrie dies für unterschiedliche Rohrdurchmesser.

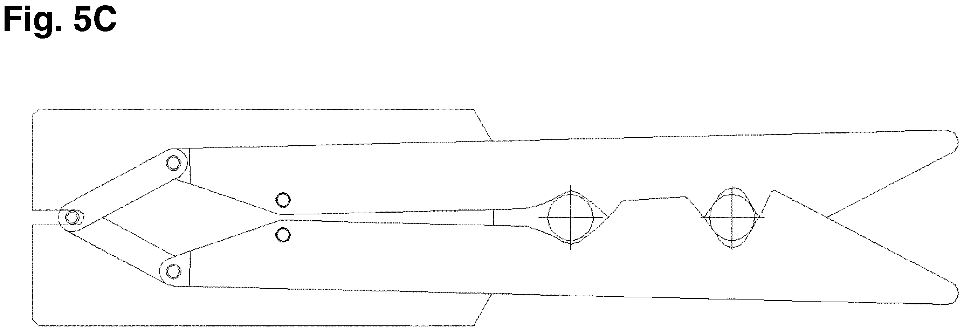

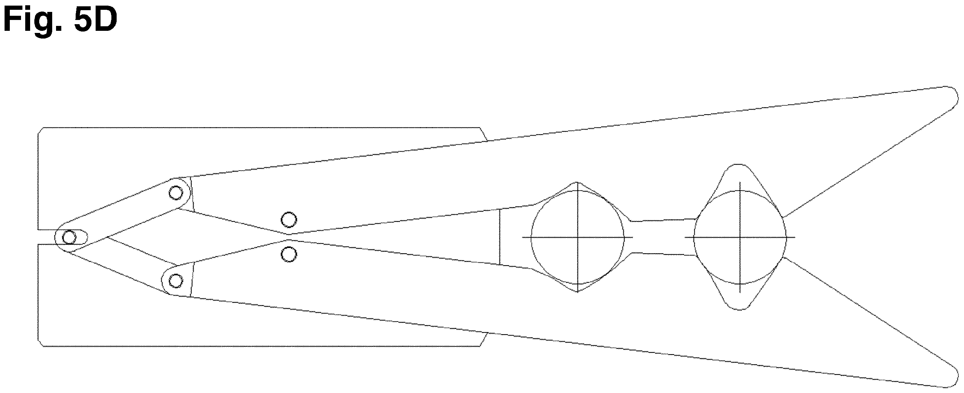

Fig. 5A und 5B zeigen die Position der Halteklammer 36 beim Vorgang des Einführens eines neuen Glasrohres 2. Fig. 5C und 5D zeigen geschlossene Positionen der Schenkel 58, 60, in denen die Glasrohre 4 in beiden Führungen vergleichsweise fest umschlossen sind. Fig. 5C zeigt, dass durch die Überlappung der Schenkel 58, 60 auch besonders kleine Glasrohrdurchmesser sicher umschlossen werden können.

Dass auch größere Glasrohrdurchmesser dennoch ebenfalls stabil in beiden Führungen gehalten werden können, wird durch ein weiteres Merkmal der gezeigten Geometrie ermöglicht: Die radial äußeren Einkerbungen 72, 76 sind keilförmig, der Öffnungswinkel dieses Keiles ist jedoch kleiner als der Öffnungswinkel der Keilform der radial inneren Einkerbungen 74, 78. Wie der Vergleich von Fig. 5C und 5D zeigt, ist in der geschlossenen Position der Schenkel 58, 60 für größere Glasrohrdurchmesser (Fig. 5D) der Öffnungswinkel der Schenkel 58, 60 naturgemäß größer. Der Abstand zwischen den radial äußeren Einkerbungen 72, 76 wird durch den größeren Abstand zu den Achsen 80, 82 stärker vergrößert als der Abstand zwischen den radial inneren Einkerbungen 74, 78. Dies wird jedoch durch den kleineren Öffnungswinkel der Keilform der radial äußeren Einkerbungen 72, 76 kompensiert, wie Fig. 5D zeigt: Auch hier wird in der äußeren Führung der radial äußeren Einkerbungen 72, 76 das Glasrohr 2 größeren Durchmessers ebenso dicht geführt wird das Glasrohr 2 geringeren Durchmessers in Fig. 5C.

Die Fig. 6A-C zeigen schließlich in einer seitlichen Ansicht den Vorgang des Schiebens des Glasrohrs 2 aus der Vorladeposition in die Ladeposition, wie oben erläutert. Fig. 6A-C zeigen eine schematische Seitenansicht des in Fig. 2 gezeigten oberen Teils der Heißformmaschine 1 mit oberem Vorladekranz 34 mit den hier nicht mehr detailliert dargestellten Halteklammer 36 und unterem Vorladekranz 32 mit der Positionierungsvorrichtung 44 aus Fig. 3 und 4A-C.

In Fig. 5A befindet sich das Glasrohr 2 schräg in einer radial weiter außen angeordneten Vorladeposition. Es ist oben in der durch die äußeren Einkerbungen 72, 76 der Halteklammer 36 und unten in der radial äußeren Position der Glasrohraufnahmen 38 gelagert. In FIG 5B erreicht der Vorladekranz 32, 34 in einem gegebenen Takt die Position, in der der bereits in Fig. 2 gezeigte Schieber 40 angeordnet ist. Dieser weist einen Kolben 86 auf, der exakt radial nach innen ausgerichtet ist und - pneumatisch betätigt - das Glasrohr 2 in eine Ladeposition schiebt, wie in Fig. 5C gezeigt. In der Ladeposition ist das Glasrohr 2 im oberen Vorladekranz 34 in der durch die inneren Einkerbungen 74, 76 der Halteklammer 36 angeordnet. Im unteren Vorladekranz ist es über der schon erwähnten Öffnungsvorrichtung 88 unter den Öffnungen 42 in den Glasrohraufnahmen 38 angeordnet. Durch die Geometrie der Halteklammern 36 kann nun sofort wieder ein neues Glasrohr 2 in die Vorladeposition geladen werden.

### Bezugszeichenliste

- 1: Heißformmaschine
- 2: Glasrohr oder halbfertiges Zwischenprodukt
- 5: Vial
- 6: zylindrische Seitenwand
- 7: Schulter
- 8: Hals
- 9: Rollrand
- 10: Muttermaschine
- 11: Säule mit Antrieb
- 12: Drehtisch
- 15: Zuführabschnitt
- 16: Übergabeabschnitt
- 17: Gasbrenner
- 18: Brennerflamme
- 20: erster Heißumformungsabschnitt
- 21: zweiter Heißumformungsabschnitt
- 22: dritter Heißumformungsabschnitt
- 30: nicht-taktiles Inspektionssystem, z.B. Videokamera
- 32: unterer Vorladekranz
- 34: oberer Vorladekranz
- 36: Halteklammer
- 38: Glasrohraufnahme
- 40: Schieber
- 42: Öffnung
- 44: Positionierungsvorrichtung
- 46, 48: Führungsring
- 50: Öffnung
- 54, 56: Innenseite
- 58, 60: Schenkel
- 62, 64: Achse
- 66: Grundplatte
- 68, 70: Innenseite
- 72, 74, 76, 78: Einkerbung
- 80, 82: Pleuel
- 84: Kolben
- 86: Kolben
- 88: Öffnungsvorrichtung

## Patentansprüche

1. Positionierungsvorrichtung (36) für einen Vorladekranz (34) einer Heißformmaschine (1), umfassend ein erstes Halteelement (58) mit einer Ausnehmung (72, 74), und
ein im Bereich der Ausnehmung (72, 74) angeordnetes, der Ausnehmung (72, 74) zugewandtes zweites Halteelement (60),
wobei die Halteelemente (58, 60) derart beweglich zueinander angeordnet sind, dass durch eine Bewegung der Halteelemente (58, 60) zueinander ein Glasrohr (2) in der Ausnehmung (72, 74) und zwischen den Halteelementen (58, 60) umfassbar ist,
wobei die Positionierungsvorrichtung (36) als Halteklammer (36) ausgebildet ist, wobei die Halteelemente (58, 60) als Schenkel (58, 60) der Halteklammer (36) ausgebildet sind, und wobei die jeweilige Bewegung der Schenkel (58, 60) um jeweils eine Achse (62, 64) erfolgt,
**dadurch gekennzeichnet, dass** der jeweilige Schenkel (58, 60) eine zweite Ausnehmung (74, 78) umfasst, die in Bezug auf die Achse radial von der ersten Ausnehmung (72, 76) entfernt und derart angeordnet ist, dass durch die Bewegung der Halteelemente (58, 60) zueinander ein zweites Glasrohr (2) in der zweiten Ausnehmung (74, 78) und zwischen den Halteelementen (58, 60) umfassbar ist.

2. Positionierungsvorrichtung (36) nach Anspruch 1, bei der die beiden Halteelemente (58, 60) und/oder deren jeweilige Bewegung spiegelsymmetrisch zueinander sind.

3. Positionierungsvorrichtung (36) nach Anspruch 1 oder 2, bei der die Bewegung der Halteelemente (58, 60) in der Art einer Scherung in unterschiedlichen Ebenen erfolgt, und wobei der Bewegungsumfang derart ist, dass die Halteelemente (58, 60) an den Außenkanten der Ausnehmung (72, 74) überlappen können.

4. Positionierungsvorrichtung (36) nach Anspruch 2 oder 3, bei der die Schenkel (58, 60) auf der der Ausnehmung (72, 74, 76, 78) abgewandten Seite der Achse (62, 64) über jeweils ein Pleuel (80, 82) mit einem in der Symmetrieachse geführten Kolben (84) verbunden sind.

5. Positionierungsvorrichtung (36) nach einem der vorhergehenden Ansprüche, bei der die jeweilige Ausnehmung (72, 74, 76, 78) als Einkerbung (72, 74, 76, 78) ausgebildet ist.

6. Positionierungsvorrichtung (36) nach Anspruch 5, bei der die mit den Einkerbungen (72, 74, 76, 78) versehenen Innenseiten (68, 70) der Schenkel (58, 60) zumindest zwischen der ersten und der zweiten Einkerbung (72, 74, 76, 78) eine auf die jeweilige Achse (62, 64) des Schenkels (58, 60) gerichtete Gerade bilden.

7. Positionierungsvorrichtung (36) nach Anspruch 2 und 6, bei der die erste und die zweite Einkerbung (72, 74, 76, 78) keilförmig ausgebildet sind, wobei der Öffnungswinkel der Einkerbung (72, 74, 76, 78) in der in Bezug auf die Achse (62, 64) radial weiter außen liegenden Einkerbung (72, 76) geringer ist als der der radial weiter innen liegenden Einkerbung (74, 78), so dass die beiden Überlappungen jeweils gespiegelter Einkerbungen (72, 74, 76, 78) in jedem Öffnungswinkel der Schenkel (58, 60) jeweils eine Führung für Glasrohre (2) gleicher Durchmesser bilden.

8. Heißformmaschine (1), umfassend einen oberen Vorladekranz (34) mit einer n-zählig radiärsymmetrisch angeordneten Mehrzahl von Positionierungsvorrichtungen (36) nach einem der vorhergehenden Ansprüche, und mit einem konzentrisch darunter angeordneten unteren Vorladekranz (32) mit einer Positionierungsvorrichtung (44)mit kreisscheibenförmigen Führungsringen, die jeweils eine gleiche Vielzahl von radiärsymmetrisch angeordneten Ausnehmungen (50) im gleichen radialen Abstand von der Achse des Führungsringes (46, 48) aufweisen, wobei die Ausnehmungen (50) jeweils als den Führungsring (46, 48) in axialer Richtung durchstoßende Öffnungen (50) ausgebildet sind, wobei die Radiärsymmetrie der Führungsringe (46, 48) ebenfalls n-zählig ist.

9. Heißformmaschine (1) nach Anspruch 8, wobei der untere Vorladekranz (32) eine n-zählig radiärsymmetrisch angeordnete Anzahl von Glasrohraufnahmen (38) umfasst, die jeweils wannenförmig in radialer Richtung erstreckt sind, und auf ihrer radial innenliegenden Seite eine axiale Öffnung (42) aufweisen, die jeweils mit einer Öffnung (50) der Führungsringe (46, 48) fluchten.

## Claims

1. A positioning device (36) for a preloading ring (34) of a hot forming machine (1), comprising
a first holding element (58) with a recess (72, 74), and
a second holding element (60) arranged in the region of the recess (72, 74) and facing the recess (72, 74),
wherein the holding elements (58, 60) are arranged movably with respect to each other in such a manner that, by means of a movement of the holding elements (58, 60) with respect to each other, a glass tube (2) can be enclosed in the recess (72, 74) and between the holding elements (58, 60),
wherein the positioning device (36) is designed as a holding clamp (36), wherein the holding elements (58, 60) are designed as limbs (58, 60) of the holding clamp (36), and wherein the respective movement of the limbs (58, 60) takes place about a respective axis (62, 64),
**characterized in that** the respective limb (58, 60) comprises a second recess (74, 78) arranged radially distant with respect to the axis from the first recess (72, 76) and in such a manner that, by means of respective movement of the holding elements (58, 60), a second glass tube (2) can be enclosed in the second recess (74, 78) and between the holding elements (58, 60).

2. The positioning device (36) as claimed in claim 1, in which the two holding elements (58, 60) and/or their respective movement are mirror-symmetrical with respect to one another.

3. The positioning device (36) as claimed in claim 1 or 2, in which the movement of the holding elements (58, 60) takes place in different planes in the manner of shearing, and wherein the extent of movement is such that the holding elements (58, 60) can overlap at the outer edges of the recess (72, 74).

4. The positioning device (36) as claimed in claim 2 or 3, in which the limbs (58, 60) are connected to a piston (84), which is guided in the axis of symmetry, via a respective connecting rod (80, 82) on the side of the axis (62, 64) facing away from the recess (72, 74, 76, 78).

5. The positioning device (36) as claimed in one of the preceding claims, in which each respective recess (72, 74, 76, 78) is designed as an indentation (72, 74, 76, 78).

6. The positioning device (36) as claimed in claim 5, wherein the inner sides (68, 70) of the limbs (58, 60), which are provided with the indentations (72, 74, 76, 78), form a straight line directed toward the respective axis (62, 64) of the limb (58, 60), at least between the first and the second indentation (72, 74, 76, 78).

7. The positioning device (36) as claimed in claims 2 and 6, in which the first and the second indentation (72, 74, 76, 78) are designed in a wedge-shaped manner, wherein the opening angle of the indentation (72, 74, 76, 78) lying radially further outwardly than the indentation (72, 76) with respect to the axis (62, 64) is smaller than that of the indentation (74, 78) lying radially further inwardly, such that the two overlays of respectively mirrored indentations (72, 74, 76, 78) each form a guide for glass tubes (2) of identical diameter in every opening angle of the limbs (58, 60).

8. A hot forming machine (1) comprising an upper preloading ring (34) having an n-fold radially symmetrically arranged plurality of positioning devices (36) as claimed in one of the preceding claims, and having a lower preloading ring (32) which is arranged concentrically therebelow and has a positioning device (44) with circular disc-shaped guide rings each having an identical multiplicity of radially symmetrically arranged recesses (50) at the same radial distance from the axis of the guide ring (46, 48), wherein the recesses (50) are each designed as openings (50) penetrating the guide ring (46, 48) in the axial direction, wherein the radial symmetry of the guide rings (46, 48) is likewise n-fold.

9. The hot forming machine (1) as claimed in claim 8, wherein the lower preloading ring (32) comprises an n-fold radially symmetrically arranged number of glass tube receivers (38) which each extend in a trough-shaped manner in the radial direction and which, on their radially inner side, have an axial opening (42), said openings are respectively aligned with an opening (50) of the guide rings (46, 48).

## Revendications

1. Dispositif de positionnement (36) pour une couronne de pré-chargement (34) d'une machine de moulage à chaud (1), comprenant un premier élément de retenue (58) avec un creux (72, 74), et
un deuxième élément de retenue (60) disposé dans la zone du creux (72, 74), tourné vers le creux (72, 74),
les éléments de retenue (58, 60) étant disposés de façon mobile l'un par rapport à l'autre de telle sorte que, par un mouvement des éléments de retenue (58, 60) l'un par rapport à l'autre, un tube en verre (2) peut être entouré dans le creux (72, 74) et entre les éléments de retenue (58, 60), le dispositif de positionnement (36) étant constitué en tant qu'agrafe de retenue (36), les éléments de retenue (58, 60) étant constitués en tant que branches (58, 60) de l'agrafe de retenue (36), et le mouvement respectif des branches (58, 60) s'effectuant autour de respectivement un axe (62, 64),
**caractérisé en ce que**
la branche (58, 60) respective comprend un deuxième creux (74, 78) qui est éloigné du premier creux (72, 76) radialement par rapport à l'axe et qui est disposé de telle sorte que, par le mouvement des éléments de retenue (58, 60) l'un par rapport à l'autre, un deuxième tube en verre (2) peut être entouré dans le deuxième creux (74, 78) et entre les éléments de retenue (58, 60).

2. Dispositif de positionnement (36) selon la revendication 1, dans lequel les deux éléments de retenue (58, 60) et/ou leur mouvement respectif sont en symétrie spéculaire l'un par rapport à l'autre.

3. Dispositif de positionnement (36) selon la revendication 1 ou 2, dans lequel le mouvement des éléments de retenue (58, 60) s'effectue à la façon d'un cisaillement dans des plans différents, et l'amplitude de mouvement étant telle que les éléments de retenue (58, 60) peuvent se chevaucher au niveau des arêtes extérieures du creux (72, 74).

4. Dispositif de positionnement (36) selon la revendication 2 ou 3, dans lequel les branches (58, 60), sur le côté de l'axe (62, 64) éloigné du creux (72, 74, 76, 78), sont raccordées respectivement par le biais d'une bielle (80, 82) à un piston (84) guidé dans l'axe de symétrie.

5. Dispositif de positionnement (36) selon l'une des revendications précédentes, dans lequel le creux (72, 74, 76, 78) respectif est constitué en tant que rainure (72, 74, 76, 78).

6. Dispositif de positionnement (36) selon la revendication 5, dans lequel les côtés intérieurs (68, 70) des branches (58, 60) munis des rainures (72, 74, 76, 78) forment, au moins entre la première et la deuxième rainure (72, 74, 76, 78), une droite dirigée vers l'axe (62, 64) respectif de la branche (58, 60).

7. Dispositif de positionnement (36) selon les revendications 2 et 6, dans lequel la première et la deuxième rainure (72, 74, 76, 78) sont constituées en forme de coin, l'angle d'ouverture de la rainure (72, 74, 76, 78) étant, dans la rainure (72, 76) située plus à l'extérieur radialement par rapport à l'axe (62, 64), plus petit que celui de la rainure (74, 78) située plus à l'intérieur radialement, de sorte que les deux chevauchements de rainures (72, 74, 76, 78) respectivement en miroir forment, dans chaque angle d'ouverture des branches (58, 60), respectivement un guidage pour des tubes en verre (2) de mêmes diamètres.

8. Machine de moulage à chaud (1), comprenant une couronne de pré-chargement (34) supérieure avec une pluralité, disposée en symétrie radiaire d'ordre n, de dispositifs de positionnement (36) selon l' une des revendications précédentes, et avec une couronne de pré-chargement (32) inférieure disposée au-dessous de façon concentrique avec un dispositif de positionnement (44) avec des bagues de guidage en forme de disque circulaire qui comportent respectivement une multiplicité identique de creux (50) disposés en symétrie radiaire à la même distance radiale de l'axe de la bague de guidage (46, 48), les creux (50) étant constitués respectivement en tant qu'ouvertures (50) traversant la bague de guidage (46, 48) dans la direction axiale, la symétrie radiaire des bagues de guidage (46, 48) étant également d'ordre n.

9. Machine de moulage à chaud (1) selon la revendication 8, la couronne de pré-chargement (32) inférieure comprenant un certain nombre de logements de tube en verre (38) disposés en symétrie radiaire d'ordre n qui s'étendent respectivement en forme de cuvette dans la direction radiale et comportent sur leur côté radialement intérieur une ouverture (42) axiale qui respectivement sont alignées avec une ouverture (50) des bagues de guidage (46, 48).
